(19) Europäisches Patentamt
European Patent Office
Office européen des brevets

(11) Veröffentlichungsnummer : **0 022 514**
**B1**

(12) # EUROPÄISCHE PATENTSCHRIFT

(45) Veröffentlichungstag der Patentschrift : **15.12.82**

(51) Int. Cl.$^3$ : **C 08 F246/00**, C 08 F218/10

(21) Anmeldenummer : **80103739.1**

(22) Anmeldetag : **01.07.80**

(54) **Wässrige Dispersion auf Grundlage von (Meth-)Acrylsäurederivaten, ihre Herstellung und Verwendung.**

(30) Priorität : **02.07.79 DE 2926631**

(43) Veröffentlichungstag der Anmeldung : **21.01.81 (Patentblatt 81/03)**

(45) Bekanntmachung des Hinweises auf die Patenterteilung : **15.12.82 Patentblatt 82/50**

(84) Benannte Vertragsstaaten : **AT BE CH DE FR GB IT LI NL SE**

(56) Entgegenhaltungen :
**DE A 2 703 311**
**US A 2 853 462**

(73) Patentinhaber : **WACKER-CHEMIE GMBH**
**Prinzregentenstrasse 22**
**D-8000 München 22 (DE)**

(72) Erfinder : **Marquardt, Klaus, Dr. Dipl.-Chem.**
**Unghauserstrasse 39**
**D-8263 Burghausen (DE)**
Erfinder : **Eck, Herbert, Dr. Dipl.-Chem.**
**Burg 11**
**D-8263 Burghausen (DE)**
Erfinder : **Batheit, Werner, Dr. Dipl.-Chem.**
**Angerer Weg 18**
**D-8263 Burghausen (DE)**

**EP 0 022 514 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Wässrige Dispersion auf Grundlage von (Meth-)Acrylsäurederivaten, ihre Herstellung und Verwendung

Die Erfindung betrifft wäßrige Dispersionen auf Grundlage von (Meth-)Acrylsäurederivaten, ihre Herstellung und Verwendung, z.B. zur Herstellung wärmehärtbarer Lacke. Solchermaßen hergestellte Lacke ergeben Überzüge mit erhöhter Oberflächenhärte bei erhöhter Elastizität, Dehnbarkeit und Substrat-Haftung.

Es ist bekannt, daß wäßrige Dispersionen von (Meth-)Acrylester-Copolymerisaten, die ggfs. noch andere, z.B. sich von Styrol ableitende Monomereinheiten enthalten und durch Einbau hydroxylgruppenenthaltender Comonomeren, wie Hydroxypropylmethacrylat und Zugabe eines Vernetzers, wie Hexamethoxymethylmelamin wärmehärtbar sind, als Bindemittel für Einbrennlacke verwendet werden können. Lackierungen, die diese Bindemittel enthalten, besitzen swar vielfach eine hohe Oberflächenhärte, sind aber dann im allgemeinen äußerst spröde, oder aber sie sind zwar flexibel, so daß der Untergrund z.B. noch verformt werden kann, ohne daß die Lackierung abspringt, weisen aber dann eine ungenügende Oberflächenhärte auf.

Aufgabe der Erfindung war daher, wäßrige Dispersionen von Copolymerisaten zur Verfügung zu stellen, die insbesondere geeignet sind, als Bindemittel für Lacke verwendet zu werden, die Überzüge ergeben mit verbesserter Oberflächenhärte und erhöhter Flexibilität.

Die Aufgabe wurde gelöst durch wäßrige Dispersionen, enthaltend 30-70 Gew.%, bezogen auf das Gesamtgewicht der Dispersion, Copolymere aus (Meth-)Acrylsäure und/oder ihren Derivaten und ggfs. weiteren damit copolymerisierbaren äthylenisch-ungesättigten Verbindungen sowie ggfs. übliche Zusatzstoffe. Diese Dispersionen sind dadurch gekennzeichnet, daß die Copolymeren 1-15 Gew.%, bezogen auf das Gesamtgewicht der Copolymeren, Einheiten der allgemeinen Formel I

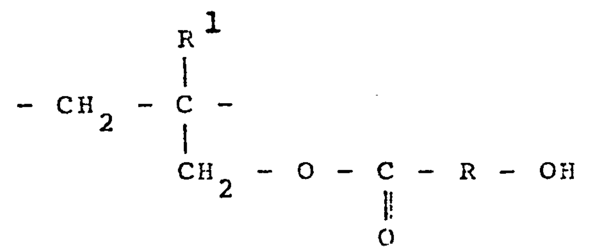

(I)

enthalten, wobei in Formel I bedeuten :

R = geradkettige Kohlenwasserstoffreste mit 2-10 Kohlenstoffatomen, die ggfs. durch bis zu drei Methyl- und/oder Äthylreste substituiert sein können ;

$R^1$ = H oder $CH_3$ und wobei die Hydroxygruppe an ein Kohlenstoffatom des Restes R gebunden ist, an das mindestens noch ein Wasserstoffatom direkt gebunden ist.

Die erfindungsgemäßen Dispersionen können hergestellt werden durch Emulsionspolymerisation in Gegenwart von üblicherweise für verwendeten freie Radikale bildenden Initiatoren und/oder Katalysatoren und ggfs. üblichen Zusatzstoffen, wobei ein Monomerengemisch, in wäßriger Phase dispergiert, copolymerisiert wird, das 1-15 Gew.%, bezogen auf das Gesamtgewicht der Comonomeren, von Verbindungen der allgemeinen Formel II

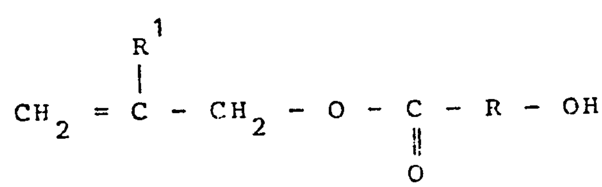

(II)

enthält. R und $R^1$ besitzen die gleiche Bedeutung wie in Formel I.

Geeignete Monomere neben den Verbindungen der Formel II zur Herstellung der erfindungsgemäßen Dispersionen sind insbesondere die Derivate der Acrylsäure und der Methacrylsäure, wie die (Meth-)Acrylsäurealkylester mit $C_1$-$C_{18}$-Alkylresten und Styrol. Dabei gelten die für Acrylsäurederivate genannten Verwendungsmöglichkeiten im allgemeinen auch für die Methacrylsäurederivate. Dieser Sachverhalt wird hier durch die Formulierung « (Meth-)Acryl- » ausgedrückt. Analoges gilt auch für die (Meth-)Allylgruppe usw.

Bevorzugte Dispersionen enthalten Copolymerisate, die aus

a) 30-70 Gew.% Einheiten solcher Monomeren aus der Gruppe der (Meth-)Acrylsäureester oder Styrol, die Homopolymere hoher Glasübergangstemperatur bilden,

b) 19-69 Gew.% Einheiten solcher Monomeren aus der Gruppe der (Meth-)Acrylsäureester, die Homopolymere niedriger Glasübergangstemperatur bilden,

c) 0-20 Gew.% weiterer Monomeren und

d) 1-15 Gew.%, jeweils bezogen auf das Gesamtgewicht der Copolymeren, Einheiten der allgemeinen Formel I aufgebaut sind.

Diese bevorzugten Dispersionen werden durch Polymerisation in wäßriger Emulsion wie vorstehend beschrieben, von 30-70 Gew.% Monomeren, die bei der Polymerisation die oben unter a) bezeichneten Einheiten ergeben, 19-69 Gew.% Monomeren, die die oben unter b) bezeichneten Einheiten ergeben, c) 0-20 Gew.% weiteren Monomeren und d) 1-15 Gew.%, jeweils bezogen auf das Gesamtgewicht des Monomerengemisches, von Verbindungen der allgemeinen Formel II hergestellt.

Zu den geeigneten Monomeren, die Homopolymere hoher Glasübergangstemperatur ($T_g$ gleich oder größer 80 °C) ergeben, gehören z.B. Methacrylsäurealkylester mit Alkylresten von 1-4 C-Atomen, insbesondere das Methyl-, das Äthyl-, die Propyl- und die Butylmethacrylate, aber auch das Styrol. Zu geeigneten Monomeren, die Homopolymere niedriger Glasübergangstemperatur ($T_g$ gleich oder kleiner etwa 10 °C) ergeben, gehören z.B. Acrylsäurealkylester mit Alkylresten von 1-8 C-Atomen, insbesondere die Butylacrylate und die Octylacrylate.

Weitere geeignete Monomere, die insgesamt bis zu 50 Gew.%, vorzugsweise bis 20 Gew.%, in die erfindungsgem. Copolymeren einpolymerisiert sein oder werden können, sind z.B. die (Meth-)Acrylsäure und ihre Salze, (Meth-)Acrylamid, (Meth-)Acrylnitril, N-Methylol(meth-)acrylamid und seine mit z.B. dazu üblichen Alkylresten verätherten Derivate, N-Vinyl-2-pyrrolidon, N-Vinyllactame, Butadien, Isopren, Divinylbenzol, Vinylester gesättigter Carbonsäuren, z.B. Vinylacetat, Vinyl- und Vinylidenhalogenide, Äthylen, ungesättigte Dicarbonsäuren wie Malein-, Fumar- und Itakonsäure, deren Salze (Halb-)-Ester und (Halb-)Amide.

Besonders vorzugsweise überschreiten die Konzentrationen dieser Monomeren in dem Monomerengemisch bzw. der davon abgeleiteten Einheiten im Copolymeren nicht 3 Gew.%, jeweils bezogen auf deren Gesamtgewicht.

Die Einheiten der Formel I leiten sich ab von Alkylestern der Formel II, vorzugsweise von omega-Hydroxycarbonsäure(meth-)allylestern. Sie können hergestellt werden durch Umsetzung von (Meth-)-Allylalkohol mit den freien omega-Hydroxy-Carbonsäuren oder den davon abgeleiteten Lactonen in Gegenwart von sauren Katalysatoren wie Schwefelsäure, p-Toluolsulfonsäure und sauren Ionenaustauschern.

Als Beispiele für bevorzugte Verbindungen der Formel II seien genannt die (Meth-)Allylester der gegebenenfalls substituierten $C_5$-$C_{11}$-Hydroxycarbonsäuren, insbesondere der 5-Hydroxyvaleriansäure, der 6-Hydroxycapronsaure, der 6-Hydroxymethylcapronsäuren, der 6-Hydroxydimethylcapronsäuren, der 7-Hydroxyönanthsäure und der 11-Hydroxyundecansäure.

Die in den erfindungsgemäßen Dispersionen enthaltenen Copolymerisate besitzen vorzugsweise K-Werte (nach Fikentscher) von etwa 40 bis etwa 140, besonders vorzugsweise von etwa 60 bis etwa 120.

Besonders bevorzugt sind Dispersionen, die 40-60 Gew.% solcher Copolymeren enthalten, die, jeweils bezogen auf das Gesamtgewicht der Copolymeren, zu 50-60 % aus von Methylmethacrylat oder Styrol abgeleiteten Einheiten, zu 24-27 Gew.% aus von Butylacrylat abgeleiteten Einheiten, zu 0-3 Gew.% aus von Acrylsäure und/oder Acrylamid abgeleiteten und zu 3-13 Gew.% aus von 6-Hydroxycapronsäureallylester abgeleiteten Einheiten aufgebaut sind.

Zur Herstellung dieser besonders bevorzugten Dispersionen werden die vorstehend genannten Monomeren in den für die Copolymerenzusammensetzung angegebenen Prozentmengen radikalisch in wäßriger Emulsion polymerisiert.

Die Polymerisation zur Herstellung der erfindungsgemäßen wäßrigen Dispersionen erfolgt nach den allgemein bekannten Verfahren der Emulsionspolymerisation mit Wasser als 2. Phase unter Verwendung der üblichen Zusätze wie Emulgatoren und ggfs. Schutzkolloiden, Initiatoren und/oder Katalysatoren, ggfs. Reduktionsmitteln oder Aktivatoren und ggfs. Puffersubstanzen.

Es ist möglich, die Reaktionsmischung mit Ausnahme der Initiatoren, Katalysatoren, Reduktionsmitteln und/oder Aktivatoren insgesamt vorzulegen und durch Zugabe dieser, die Radikale liefernden Komponenten die Polymerisation zu starten.

Vielfach ist es vorteilhafter, zu einer Vorlage aus Wasser, Emulgator und ggfs. Schutzkolloiden die Gesamtmenge oder einen Teil der Monomeren und/oder der die Radikale liefernden Komponenten erst während der Polymerisation zu dosieren.

Selbstverständlich ist es auch möglich, einzelne Monomere vorsulegen und die anderen Monomeren zu dosieren, bzw. umgekehrt zu verfahren. Insbesondere hat es sich vielfach als zweckmäßig erwiesen, die Gesamtmenge oder den größeren Teil der Hydroxycarbonsäure(meth)allylester im Gemisch mit einem kleineren Teil der anderen Monomeren vorzulegen und die restliche Monomerenmenge allmählich während der Polymerisation zuzugeben.

Das Initiatorsystem kann selbstverständlich auf einmal zugegeben werden, vielfach hat es sich aber als vorteilhaft erwiesen, es über die Zeit der Polymerisation verteilt zu dosieren.

Bei der Herstellung der erfindungsgemäßen Dispersionen können dieselben Dispersionshilfsstoffe eingesetzt werden, die bisher schon zur Herstellung von wäßrigen Dispersionen durch Emulsionspolymerisation verwendet wurden. So können z.B. ionische und nichtionische Emulgatoren allein oder zusammen mit Schutzkolloiden verwendet werden.

Beispiele für ionische Emulgatoren sind Alkyl-, Aryl-, Alkaryl- und Aralkylsulfonsäuren, wie z.B. Tetradecansulfonsäure, sowie deren Salze, insbesondere mit den Metallen der 1. Hauptgruppe des

Periodensystems, mit Ammoniak oder mit Aminen.

Beispiele für nichtionische Emulgatoren sind die Anlagerungsprodukte von Äthylenoxid an Phenole, Fettalkohole, Fettsäuren, Amine und dgl.

Beispiele für schutzkolloide sind ganz oder teilweise verseiftes Polyvinylacetat, Cellulosederivate wie Methylcellulose und Hydroxyäthylcellulose.

Als Katalysatoren oder Initiatoren zur Herstellung der erfindungsgemäßen Dispersionen können dieselben verwendet werden, die üblicherweise in Emulsionspolymerisationen eingesetzt werden, insbesondere freie Radikale bildende Verbindungen wie peroxidische oder Azo-Verbindungen, z.B. Ammonium- oder Kaliumpersulfat, Azobiscyanovaleriansäure, tert. Butylhydroperoxid oder Redoxkatalysatoren, die aus peroxidischen Verbindungen und Reduktionsmitteln als Aktivatoren zusammengesetzt sind.

Gegebenenfalls können auch Puffersubstanzen wie Alkalibicarbonate, -phosphate usw. mitverwendet werden.

Die Dispersionshilfsstoffe und die Polymerisationsinitiatoren und -katalysatoren und Puffersubstanzen werden in den bei der Emulsionspolymerisation üblichen Mengen angewandt. Die Menge der freien Radikale bildenden Verbindungen liegt im allgemeinen vorzugsweise im Bereich von 0,001-1 Gew.%, bezogen auf das Gesamtgewicht der Comonomeren, die Menge der Dispergiermittel liegt im allgemeinen vorzugsweise im Bereich von 0,1-10 Gew.%, bezogen auf das Gesamtgewicht der Comonomeren.

Die erfindungsgemäßen Dispersionen können vorzugsweise zur Herstellung von heißhärtbaren Lacken verwendet werden. Diese Einbrennlacke eignen sich insbesonders für die Beschichtung von festen Oberflächen, besonders vorzugsweise von Metallgegenständen wie z.B. Gehäusen und Teilen von Waschmaschinen oder Kühlschränken, da sie Beschichtungen hoher Oberflächenhärte ergeben, die aber trotzdem aufgrund ihrer Elastizität auch bei stoßartiger Beanspruchung nicht abspringen. Darüberhinaus eignen sich diese Beschichtungen auch für das « coil-coating »-Verfahren, da die dabei nach der Lackierung erfolgte Formgebung des Metalls praktisch ohne Einfluß auf die Qualität der Beschichtung bleibt.

Die heißärtbaren Lacke werden hergestellt durch in an sich bekannter Weise erfolgende Zugabe von Pigmenten, Farbstoffen, Füllstoffen und ggfs. weiteren üblichen Hilfsstoffen, wie Verlaufshilfsmitteln, Verfilmungshilfsstoffen, Dispergiermitteln, Netzmitteln, Hilfsstoffen zur Beeinflussung der rheologischen Eigenschaften der Lacke zu den erfindungsgemäßen Dispersionen sowie durch Zugabe von Vernetzungsmitteln.

Die Vernetzungsmittel wie z.B. Melaminharze, Harnstoff-Formaldehyd-Harze, Phenol-Formaldehyd-Harze und blockierte Isocyanate werden vorzugsweise in Mengen von 1-10, besonders vorzugsweise von 2-5 Gew.%, bezogen auf das Gewicht des Bindemittels, also der in den erfindungsgemäßen Dispersionen enthaltenen Copolymerisate, zugesetzt.

Als Pigmente, Farbstoffe und/oder Füllstoffe sowie ggfs. Verlaufshilfsmittel, Verfilmungshilfsstoffe, Dispergiermittel, Netzmittel und/oder Hilfsstoffe zur Beeinflussung der rheologischen Eigenschaften können solche in den allgemein üblichen Mengen verwendet werden, die bisher bereits in Einbrennlacken auf Grundlage von wäßrigen Polymerdispersionen verwendet wurden.

Pigmente oder Füllstoffe, wie oxidische und sulfidische Metallverbindungen, Ruß, Sulfate, Silicate, Chromate oder organische Farbpigmente, Metallpulver wie Aluminium, Bronze usw., Talkum, Baryt, Kaolin, Quarz, Glimmer, Diatomeenerde, PVC-Pulver und dgl., werden vorzugsweise in Mengen von 0-100, insbesondere 20-80 Gew.%, bezogen auf den Bindemittelgehalt, eingesetzt.

Die zusätzlichen Netz- und Dispergierhilfsstoffe, wie Meta- und Polyphosphatverbindungen, können vorzugsweise in Mengen bis 2 Gew.%, bezogen auf das Gewicht des Bindemittels, Verlaufs- und Verfilmungshilfsstoffe, wie mehrwertige Alkohole, hochsiedende Kohlenwasserstoffe, insbesondere Aromaten, und hochsiedende Ester können vorzugsweise in Mengen bis zu 10 Gew.%, insbesondere 0-3 Gew.%, bezogen auf das Bindemittel, und Hilfsstoffe zur Beeinflussung der rheologischen Eigenschaften, wie höhersiedende Alkanole, können vorzugsweise bis zu 20 Gew.%, bezogen auf die Dispersion, zugesetzt werden.

Die so hergestellten Einbrennlacke können bei Temperaturen von 80-300 °C, vorzugsweise 100-200 °C, ggfs. unter Druck, ausgehärtet werden. Die dazu benötigte Erhitzungsdauer beträgt vorzugsweise 5-60 Minuten, insbesondere jedoch nicht mehr als 30 Minuten. Die Einbrenndauer kann durch Verwendung geeigneter Katalysatoren, z.B. saurer Verbindungen (Toluolsulfonsäure) bei Einsatz von Formaldehyd-Kondensationsprodukten als Vernetzern oder organischer Zinnverbindungen (Dibutylzinndilaurat) bei Verwendung von blockierten Diisocyanaten als Vernetzern in an sich bekannter Weise verkürzt werden: Man erhält dabei völlig homogene, gegen die meisten Lösungsmittel beständige Überzüge.

Folgende Beispiele sollen die Erfindung näher erläutern : Die Beispiele 1-5 erläutern die Herstellung der erfindungsgemäßen Dispersionen :

## Beispiel 1

In einem 2 l-Glasgefäß mit Rüher und Rückflußkühler werden 330 g Wasser und 9 g einer 30 %igen,

wäßrigen Alkylsulfonatlösung (Merlosat(R) K 30 Bayer AG) vorgelegt und auf 80 °C erhitzt. Nachdem ein pH-Wert von 3,3 eingestellt ist, wird folgende Monomeremulsion innerhalb von 2 Stunden bei 80 °C unter Rühren zudosier

| | | |
|---|---|---|
| 550 | g | Wasser |
| 4,5 | g | Mersolat(R) K 30 (30 %ig) |
| 4,5 | g | $K_2S_2O_8$ |
| 9,0 | g | Acrylsäure |
| 18,0 | g | Acrylamid |
| 495,0 | g | Methylmethacrylat |
| 350,0 | g | Butylacrylat |
| 57,0 | g | 6-Hydroxycapronsäureallylester |

Anschließend wird mit Ammoniak ein pH-Wert von 8 eingestellt und noch eine Stunde lang bei 80 °C unter Rühren nachpolymerisiert. Die Dispersion besitzt anschließend einen Festgehalt von 50,2 Gew.% und eine Viskosität von 765 mPa.s (Brookfield-RVT-Viscosimeter, 10 $min^{-1}$).

## Beispiel 2

Beispiel 1 wird wiederholt, in der Monomeremulsion werden jedoch die Gewichtsanteile wie folgt geändert :

| | |
|---|---|
| Methylmethacrylat : | 540 g |
| Butylacrylat : | 250 g |
| 6-Hydroxycapronsäureallylester : | 114 g |

## Beispiel 3

Beispiel 1 wird wiederholt, in der Monomerzusammensetzung werden folgende Änderungen vorgenommen :

| | |
|---|---|
| Methylmethacrylat : | 540 g |
| Äthylhexylacrylat (anstelle von Butylacrylat) : | 305 g |

## Beispiel 4

Beispiel 1 wird wiederholt, anstelle von Methylmethacrylat werden jedoch 495 g Styrol eingesetzt.

## Vergleichsversuch A

Beispiel 1 wird wiederholt, anstelle von Hydroxycapronsäureallylester wird jedoch die gleiche Molmenge 2-Hydroxypropylmethacrylat eingesetzt. Die Monomerzusammensetzung der Emulsion enthält statt der in Beispiel 1 angegebenen Menge an

| | |
|---|---|
| Butylacrylat : | 361 g, |
| sowie 2-Hydroxypropylmethacrylat (anstelle des Hydroxycapronsäureallylesters) : | 46 g |

## Beispiel 5

Die Copolymerdispersionen der Beispiele 1-4 und des Vergleichsversuchs A werden nach folgender Rezeptur zu einem weißen, glänzenden Einbrennlack gemischt (Tab. 1) :

TABELLE 1

| Bestandteile | Gewichtsteile |
|---|---|
| Copolymerdispersion (Beispiele 1-4 und Vergleichsversuch A) | 100 |
| Hexamethoxymethylmelamin (25 %ig in Wasser/Isopropanol 93 : 7) | 8 |
| Metaphosphat (Calgon (R) N, 10 %ig in Wasser) | 0,2 |
| Polyphosphat (Dispergiermittel PA 30, Hoechst AG) | 0,2 |
| Titandioxyd Kronos (R) RN 45 | 15 |
| Propylenglykol | 1 |

Die Mischungen wurden in einer Dicke von 20 µm auf Erichsentiefungsbleche (DIN 1624, Deutsche Industrienorm) aufgetragen und bei 150 °C 10 Minuten lang eingebrannt.

In allen Fällen ergeben sich gut haftende, glänzende Beschichtungen, die den in Tabelle 2 aufgeführten Prüfungen unterzogen wurden.

Daneben sind in Tabelle 2 Werte einer Ermittlung der Bruchdehnung nach DIN 53 504 genannt. Hierzu wurden unpigmentierte Filme hergestellt und 10 Minuten bei 150 °C getempert.

TABELLE 2

Eigenschaften von Einbrennlacken auf der Basis der in den Beispielen 1-4 und im Vergleichsversuch A hergestellten Copolymer-Dispersionen.

| Dispersion aus Beispiel Nr. | 1 | 2 | 3 | 4 | Vgl. Vers. |
|---|---|---|---|---|---|
| Oberflächenhärte nach König (s) (DIN 53 157) | 137 | 166 | 105 | 162 | 97 |
| Bruchdehnung (%) (DIN 53 504) | 330 | 140 | 370 | 130 | 130 |
| Kugelschlagprüfung (inch. pound) (ASTM D 2794) | 70 | 2 | — | — | < 2 |
| ($10^{-3}$ kg · m, umgerechnet) | 807 | 23 | — | — | < 23 |
| Erichsentiefung (mm) (DIN 53 156) | Blechriß | Blechriß | Blechriß | Blechriß | 8 |
| Dornbiegeversuch (mm) (DIN 53 152) | < 2 | < 2 | < 2 | < 2 | < 2 |
| Vernetzungsgrad (%)*) | > 99 | > 99 | > 99 | > 99 | > 99 |

*) Bestimmt durch Extraktionsversuche mit siedendem Äthylacetat

**Ansprüche** (für die Vertragsstaaten : BE, CH, DE, FR, GB, IT, LI, NL, SE)

1. Wäßrige Dispersionen, enthaltend 30-70 Gew.%, bezogen auf Gesamtgewicht, Copolymere aus (Meth-)Acrylsäure und/oder ihren Derivaten und weiteren damit copolymerisierbaren äthylenisch ungesättigten Verbindungen sowie ggfs. üblichen Zusatzstoffen, dadurch gekennzeichnet, daß die Copolymeren 1-15 Gew.%, bezogen auf das Gesamtgewicht der Copolymeren, von Einheiten der allgemeinen Formel (I)

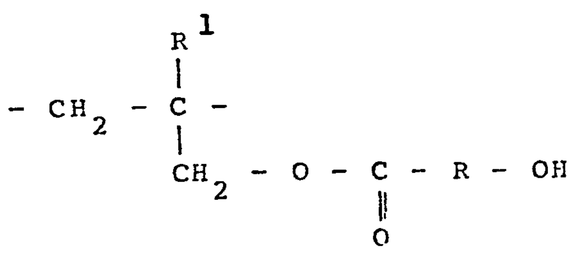

(I)

enthalten, wobei in Formel (I) bedeuten :

R = geradkettige Kohlenwasserstoffreste mit 2-10 Kohlenstoffatomen, die ggfs. durch bis zu 3 Methyl- und/oder Äthylreste substituiert sein können ;

$R^1$ = H, $CH_3$ und wobei die Hydroxygruppe an ein Kohlenstoffatom gebunden ist, an das mindestens noch ein H-Atom direkt gebunden ist.

2. Verfahren zur Herstellung von Dispersionen gemäß Anspruch 1 durch Emulsionspolymerisation in Gegenwart von freie Radikale bildende Initiatoren und üblichen Hilfsstoffen, dadurch gekennzeichnet, daß ein Monomerengemisch in wäßriger Phase dispergiert, copolymerisiert wird, das 1-15 Gew.% von

Verbindungen der allgemeinen Formel (II)

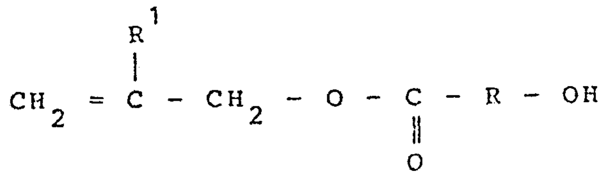

(II)

enthält, worin R und $R^1$ die gleiche Bedeutung wie in Formel (I) besitzen und wobei die Hydroxygruppe an ein Kohlenstoffatom gebunden ist, an das mindestens noch ein Wasserstoffatom direkt gebunden ist.

3. Wärmehärtbare Lacke, enthaltend die Dispersion nach Anspruch 1 und zusätzlich, jeweils bezogen auf das Gewicht der in diesen Dispersionen enthaltenen Copolymeren,

1- 10 Gew.% Vernetzungsmittel
0-100 Gew.% Pigmente und/oder Füllstoffe

und ggfs. weitere übliche Zusätze.

4. Verwendung der Dispersionen nach Anspruch 1 zur Herstellung wärmehärtbarer Lacke.

**Ansprüche** (für den Vertragsstaat AT)

1. Verfahren zur Herstellung von wäßrigen Dispersionen, enthaltend 30 bis 70 Gew.%, bezogen auf Gesamtgewicht, Copolymere aus (Meth-)Acrylsäure und/oder ihren Derivaten und weiteren damit copolymerisierbaren äthylenisch-ungesättigten Verbindungen, sowie gegebenenfalls übliche Zusatzstoffe, durch Emulsionspolymerisation in Gegenwart von freie Radikale bildenden Initiatoren und üblichen Hilfsstoffen, dadurch gekennzeichnet, daß ein Monomerengemisch in wäßriger Phase dispergiert, copolymerisiert wird, das 1 bis 15 Gew.% von Verbindungen der allgemeinen Formel (II)

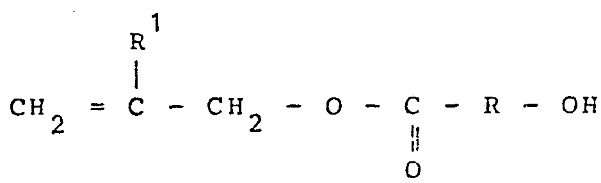

enthält, wobei

R = geradkettige Kohlenwasserstoffreste mit 2 bis 10 Kohlenstoffatomen, die gegebenenfalls durch bis zu 3 Methyl- und/oder Ethylreste substituiert sein können,

$R^1$ = H, $CH_3$ bedeuten

und wobei die Hydroxygruppe an ein Kohlenstoffatom gebunden ist, an das mindestens noch ein H-Atom direkt gebunden ist.

2. Wärmehärtbare Lacke, enthaltend die nach Anspruch 1 hergestellten Dispersionen und zusätzlich, jeweils bezogen auf das Gewicht der in diesen Dispersionen enthaltenen Copolymeren,

1 bis 10 Gewichtsprozent Vernetzungsmittel
0 bis 100 Gewichtsprozent Pigmente und/oder Füllstoffe

und gegebenenfalls weitere übliche Zusätze.

3. Verwendung der nach Anspruch 1 hergestellten Dispersionen zur Herstellung wärmehärtbarer Lacke.

**Claims** (for the Contracting States : BE, CH, DE, FR, GB, IT, LI, NL, SE)

1. Aqueous dispersions containing from 30 to 70 % by weight, calculated on the total weight, of copolymers comprising (meth)acrylic acid and/or derivatives thereof and other ethylenically unsaturated compounds copolymerisable therewith and, optionally, customary additives, characterised in that the copolymers comprise from 1 to 15 % by weight, calculated on the total weight of the copolymers, of units of the general formula (I)

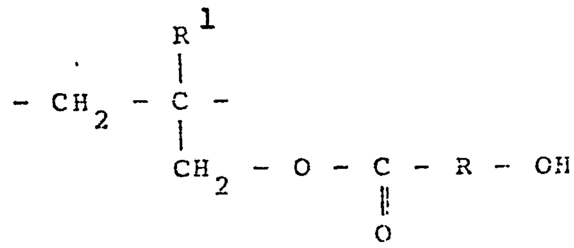

(I)

in which

R = straight-chain hydrocarbon radicals having from 2 to 10 carbon atoms optionally substituted by up to 3 methyl and/or ethyl radicals,

$R^1 = H, CH_3$,

and in which the hydroxy group is bonded to a carbon atom to which at least one additional H atom is directly bonded.

2. Process for the manufacture of dispersions according to claim 1 by emulsion polymerisation in the presence of free-radical-forming initiators and customary auxiliaries, characterised in that a monomeric mixture, dispersed in an aqueous phase, is copolymerised, the mixture comprising from 1 to 15 % by weight of compounds of the general formula (II)

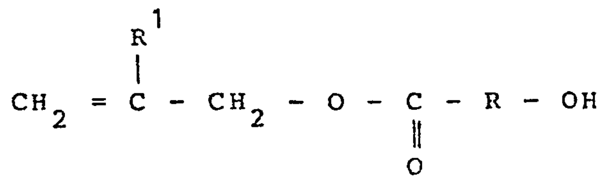

(II)

in which R and $R^1$ have the same meanings as in formula (I) and in which the hydroxy group is bonded to a carbon atom to which at least one additional hydrogen atom is directly bonded.

3. Heat-curable varnishes containing the dispersions according to claim 1 and, in addition, in each case calculated on the weight of the copolymers contained in the dispersions :

from 1 to 10 % by weight of cross-linking agents,
from 0 to 100 % by weight of pigments and/or fillers,

and, optionally, other customary additives.

4. Use of dispersions according to claim 1 for the manufacture of heat-curable varnishes.

**Claims** (for the Contracting State AT)

1. Process for the manufacture of aqueous dispersions containing from 30 to 70 % by weight, calculated on the total weight, of copolymers comprising (meth)acrylic acid and/or derivatives thereof and other ethylenically unsaturated compounds copolymerisable therewith and, optionally, customary additives, by emulsion polymerisation in the presence of free-radical-forming initiators and customary auxiliaries, characterised in that a monomeric mixture, dispersed in an aqueous phase, is copolymerised, the mixture comprising from 1 to 15 % by weight of compounds of the general formula (II)

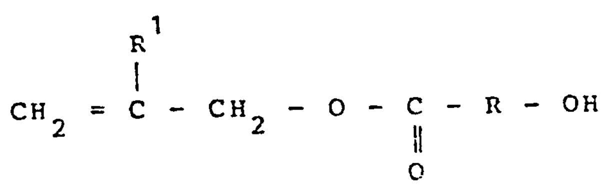

(I)

in which

R = straight-chain hydrocarbon radicals having from 2 to 10 carbon atoms optionally substituted by up to 3 methyl and/or ethyl radicals,

$R^1 = H, CH_3$,

and in which the hydroxy group is bonded to a carbon atom to which at least one additional H atom is directly bonded.

2. Heat-curable varnishes containing the dispersions manufactured according to claim 1 and, in addition, in each case calculated on the weight of the copolymers contained in the dispersions :

from 1 to 10 % by weight of cross-linking agents,
from 0 to 100 % by weight of pigments and/or fillers,

and, optionally, other customary additives.

3. Use of the dispersions manufactured according to claim 1 for the manufacture of heat-curable varnishes.

**Revendications** (pour les Etats contractants : BE, CH, DE, FR, GB, IT, LI, NL, SE)

1. Dispersions aqueuses qui contiennent de 30 à 70 % en poids, par rapport au poids total, de copolymères dérivant de l'acide acrylique et/ou de l'acide méthacrylique et/ou de leurs dérivés et d'autres composés éthyléniques copolymérisables avec ces composés acryliques, et contenant éventuellement des additifs usuels, dispersions caractérisées en ce que les copolymères renferment de 1 à 15 % en poids, par rapport au poids total des copolymères, de motifs répondant à la formule générale (I)

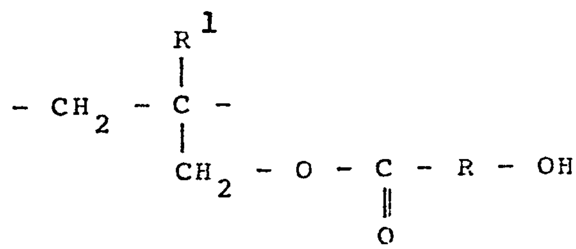
(I)

dans laquelle

R = un radical hydrocarboné linéaire contenant de 2 à 10 atomes de carbone et portant éventuellement jusqu'à 3 radicaux méthyles et/ou éthyles,

$R^1$ = H ou $CH_3$

et dans laquelle le groupe hydroxy est porté par un atome de carbone auquel est lié directement encore au moins un atome d'hydrogène.

2. Procédé de préparation de dispersions selon la revendication 1, par polymérisation en émulsion en présence d'amorceurs générateurs de radicaux libres et en présence d'adjuvants usuels, procédé caractérisé en ce qu'on copolymérise un mélange de monomères mis sous la forme d'une dispersion dans une phase aqueuse, mélange qui contient de 1 à 15 % en poids de composés répondant à la formule générale (II)

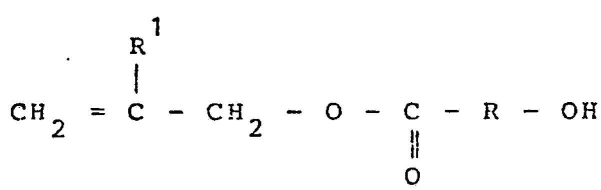
(II)

dans laquelle R et $R^1$ ont les mêmes significations que dans la formule (I) et dans laquelle le groupe hydroxy est porté par un atome de carbone auquel est lié directement encore au moins un atome d'hydrogène.

3. Peintures et vernis thermodurcissables contenant des dispersions selon la revendication 1 et, en plus, à chaque fois par rapport au poids des copolymères contenus dans ces dispersions :

de 1 à 10 % en poids d'un réticulant,
de 0 à 100 % en poids de pigments et/ou de charges,

et éventuellement d'autres additifs usuels.

4. Application des dispersions selon la revendication 1 à la préparation de peintures et vernis thermodurcissables.

**Revendications** (pour l'Etat contractant AT)

1. Procédé de préparation de dispersions aqueuses qui contiennent de 30 à 70 % en poids, par rapport au poids total, de copolymères dérivant de l'acide acrylique et/ou de l'acide méthacrylique et/ou

de leurs dérivés et d'autres composés éthyléniques copolymérisables avec ces monomères acryliques, et qui peuvent en outre contenir des additifs usuels, par polymérisation en émulsion en présence d'amorceurs générateurs de radicaux libres et en présence d'adjuvants usuels, procédé caractérisé en ce qu'on copolymérise un mélange de monomères sous la forme d'une dispersion dans une phase aqueuse, mélange qui contient de 1 à 15 % en poids de composés répondant à la formule générale (II)

$$CH_2 = \overset{\overset{\displaystyle R^1}{|}}{C} - CH_2 - O - \underset{\underset{\displaystyle O}{\|}}{C} - R - OH \qquad (II)$$

dans laquelle

R = Un radical hydrocarboné linéaire contenant de 2 à 10 atomes de carbone et portant éventuellement jusqu'à 3 radicaux méthyles et/ou éthyles,

$R^1$ = H ou $CH_3$

et dans laquelle le groupe hydroxy est porté par un atome de carbone auquel est lié directement encore au moins un atome d'hydrogène.

2. Peintures et vernis thermodurcissables contenant des dispersions préparées selon la revendication 1 et, en outre, à chaque fois par rapport au poids des copolymères contenus dans ces dispersions :

de 1 à 10 % en poids d'un réticulant,
de 0 à 100 % en poids de pigments et/ou de charges,

et éventuellement d'autres additifs usuels.

3. Application des dispersions préparées selon la revendication 1 à la préparation de peintures et vernis thermodurcissables.